# EUROPÄISCHE PATENTSCHRIFT

(11) **EP 2 054 282 B1**
(45) Veröffentlichungstag und Bekanntmachung des Hinweises auf die Patenterteilung: **17.02.2010**
(21) Anmeldenummer: 07787391.7
(22) Anmeldetag: 11.07.2007
(51) Int. Cl.: B60T 8/00, B60T 8/17, B60T 17/22, B60T 7/12, B61L 25/02, G01C 22/00, B60T 13/66

(54) **VERFAHREN UND SYSTEM ZUR BREMSKRAFTERHALTENDEN AKTIVIERUNG EINER FREILAUFENDEN ACHSE**
METHOD AND SYSTEM FOR THE ACTIVATION OF A FREEWHEELING AXLE IN ORDER TO MAINTAIN A BRAKING FORCE
PROCÉDÉ ET SYSTÈME POUR ACTIVER UN ESSIEU LIBRE EN CONSERVANT LA FORCE DE FREINAGE

(30) Priorität: 25.08.2006 DE 102006039883
(43) Veröffentlichungstag der Anmeldung: 06.05.2009
(73) Patentinhaber: SIEMENS AKTIENGESELLSCHAFT, 80333 München (DE)
(72) Erfinder: KLEIN, Wolfram, 85579 Neubiberg (DE); MÄCKEL, Oliver, 85551 Heimstetten (DE)
(86) Internationale Anmeldenummer: PCT/EP2007/057120
(87) Internationale Veröffentlichungsnummer: WO 2008/022847

(56) Entgegenhaltungen:
- EP-A- 0 741 065
- DE-A1- 3 039 265
- DE-U1- 9 411 677

## Beschreibung

Die Erfindung betrifft ein Verfahren und ein System zur bremskrafterhaltenden Aktivierung einer freilaufenden Achse eines Zuges, insbesondere bei fahrerlosen Zugsystemen bzw. AGT-Systemen (Automated Guided Trains).

Im öffentlichen Nahverkehr als auch im regionalen Schienenverkehr werden zunehmend so genannte AGT-Systeme, d. h. fahrerlose Zugsysteme, eingesetzt. Bei derartigen Zügen kommt es zu häufigen Bremsvorgängen, insbesondere an Haltestationen, bei denen der Zug an einer vorgegebenen Position zum Stehen kommen muss. Da AGT-Systeme Personen befördern und zudem mindestens teilweise keinen Fahrer aufweisen, muss das Bremssystem in derartigen Zügen besondere sicherheitskritische Anforderungen erfüllen.

Zur Positionserkennung des Zuges verfügt dieser über eine so genannte freilaufende Achse. Diese Achse wird weder gebremst noch beschleunigt, sodass kein Schlupf zwischen einem an der Achse angebrachten Rad und der Schiene entsteht, auf welcher der Zug fährt. Zur Positionsbestimmung des Zuges werden die Umdrehungen der freilaufenden Achse ausgehend von einem Referenzpunkt gezählt.

Das Bremssystem des Zuges muss eine ausreichende Bremskraft sowohl im Normalbetrieb als auch in einem Notfall erzeugen.

Die notwendige Bremskraft, die ein Bremssystem eines Zuges liefern muss, hängt neben dem zur Verfügung stehenden Bremsweg von der Geschwindigkeit des Zuges, dem Gewicht des Zuges, der Reibung zwischen den Zugrädern und dem Gleis bzw. der Schiene sowie von der Anzahl der mit Bremsen versehenen Achsen des Zuges ab.

Dokument DE 30 39 265 A1 offenbart ein Verfahren, wobei mindestens eine freilaufende Achse zur Positionsbestimmung des Zuges aktiviert ist und andere Achsen als nicht-freilaufende Achsen zum Bremsen des Zuges aktiviert sind.

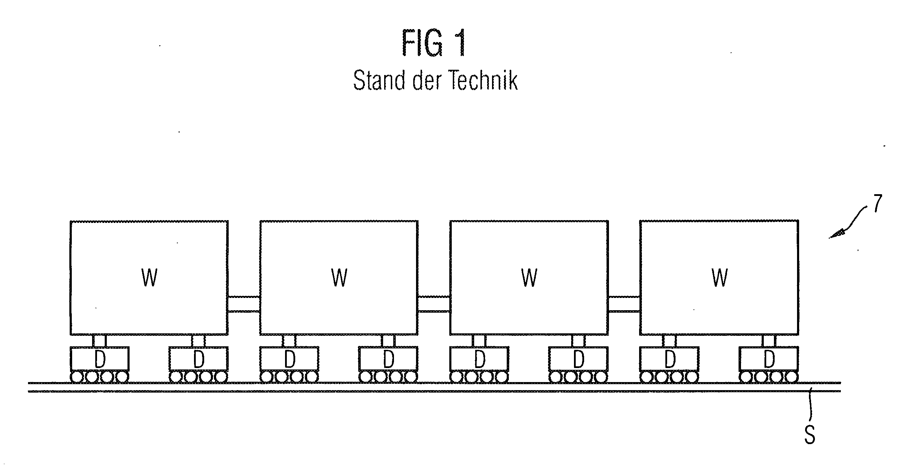

Figur 1 zeigt einen Zug Z nach dem Stand der Technik, der auf einer Schiene S fährt. Der Zug Z besteht aus mehreren Waggons W, die miteinander gekoppelt sind und jeweils mindestens zwei Drehgestelle D aufweisen. An den Drehgestellen D sind beispielsweise vier Achsen mit je zwei Rädern angebracht. Neben den Bremsen der Achsen kann durch den Motor des Zuges Z eine zusätzliche Verzögerung erreicht werden. Als Zusatzbremssystem für den Notfall besteht die Möglichkeit, zusätzliche eine Magnetschienenbremse in dem Zug vorzusehen. Eine Magnetschienenbremse hat allerdings den Nachteil, dass deren Gewicht relativ hoch ist und somit das Gesamtgewicht des Zuges erhöht bzw. die maximale Anzahl der zu transportierenden Personen gesenkt. Je mehr gebremste Achsen der Zug Z aufweist, desto höher ist die potenzielle Bremskraft des Zuges. Zur Positionsbestimmung benötigt der Zug Z mindestens eine freilaufende Achse. Bei herkömmlichen Zügen weisen die freilaufenden Achsen keine Bremsen auf. Die freilaufenden Achsen werden dabei in der Konstruktion vorgegeben und stehen für Bremsvorgänge nicht zur Verfügung.

Es wurde daher vorgeschlagen, die Positionserkennung des Zuges nicht über freilaufende Achsen durchzuführen, sondern ein radarbasiertes Positionserkennungssystem an dem Zug vorzusehen. Das Vorsehen eines radarbasierten Positionserkennungssystems stellt allerdings einen erheblichen technischen Zusatzaufwand dar und erfüllt unter Umständen die Sicherheitskriterien bei einem fahrerlosen Zugsystem nicht.

Bei herkömmlichen Zugbremssystemen werden daher genügend mit Bremsen versehene Achsen vorgesehen, um die notwendige Bremskraft selbst in einer Situation mit besonders schlechten Bedingungen zu liefern. Die notwendige Anzahl der gebremsten Achsen N ist für eine minimale Reibung p zwischen den Rädern und der Schiene S bei gleichzeitig hoher Geschwindigkeit V des Zuges Z und hohem Gewicht G der beförderten Last ausgelegt.

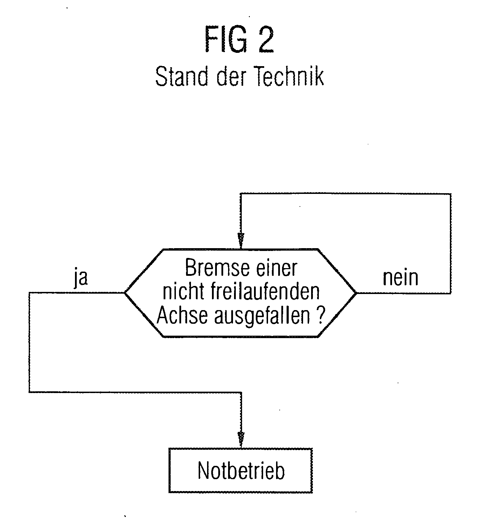

Bei einem herkömmlichen Bremssystem für einen Zug Z erfolgt herkömmlicherweise eine ständige Kontrolle, ob eine der Bremsen an einer nicht-freilaufenden Achsen des Zuges Z ausgefallen ist oder nicht, wie in Figur 2 dargestellt ist. Ist dies der Fall, geht der Zug Z in einen Notbetrieb über. Dabei wird die Geschwindigkeit V des Zuges herabgesetzt und der Zug zeigt an, dass er möglichst bald einer Reparatur bedarf. Aufgrund der in Figur 2 dargestellten herkömmlichen Vorgehensweise kommt es relativ häufig zu einem Ausfall des Zuges Z und zu einer Störung des Fahrplans.

Es ist daher die Aufgabe der vorliegenden Erfindung, ein Verfahren und ein System zum Bremsen eines Zuges zu schaffen, das zuverlässig die erforderliche Bremskraft liefert und gleichzeitig die Anzahl der Zugausfälle minimiert.

Diese Aufgabe wird erfindungsgemäß durch ein Verfahren mit den im Patentanspruch 1 angegebenen Merkmalen gelöst.

Die Erfindung schafft ein Verfahren zur bremskrafterhaltenden Aktivierung einer freilaufenden Achse eines Zuges Z, der mehrere Achsen aufweist,
wobei mindestens eine freilaufende Achse F zur Positionsbestimmung des Zuges aktiviert ist und die übrigen Achsen N als nicht-freilaufende Achsen zum Bremsen des Zuges Z aktiviert sind,
wobei bei Ausfallen einer Bremse, die an einer nicht-freilaufenden Achse N vorgesehen ist, eine bisher freilaufende Achse F als nicht-freilaufende Achse N aktiviert wird und die nicht-freilaufende Achse N, die die ausgefallene Bremse aufweist, als freilaufende Achse F zur Positionsbestimmung des Zuges Z aktiviert wird.

Bei einer bevorzugten Ausführungsform des erfindungsgemäßen Verfahrens wird bei Bremsausfall eine bisher als freilaufend aktivierte Achse nur dann als nicht-freilaufend aktiviert, wenn festgestellt wird, dass die an der freilaufenden Achse vorgesehenen Bremsen nicht ausgefallen sind.

Bei einer weiteren Ausführungsform des erfindungsgemäßen Verfahrens wird ein Notbetrieb des Zuges eingeleitet, wenn festgestellt wird, dass keine freilaufende Achse mehr vorhanden ist, deren Bremsen nicht ausgefallen sind.

Bei einer weiteren Ausführungsform des erfindungsgemäßen Verfahrens werden die Achsen als nicht-freilaufend zum Bremsen des Zuges und als freilaufende Achsen zur Positionsbestimmung des Zuges initialisiert.

Bei einer bevorzugten Ausführungsform des erfindungsgemäßen Verfahrens wird bei einem normalen Bremsvorgang der Zug durch Betätigen der Bremsen der als nicht-freilaufend aktivierten Achsen gebremst.

Bei einer bevorzugten Ausführungsform des erfindungsgemäßen Verfahrens werden bei einem Notbremsvorgang der Zug sowohl durch Betätigen der Bremsen der als nicht-freilaufend aktivierten Achsen als auch von zusätzlich angebrachten Bremsen an den als freilaufend aktivierten Achsen gebremst.

Bei einer weiteren Ausführungsform des erfindungsgemäßen Verfahrens wird, wenn eine Bremse einer nicht freilaufenden Achse, die an einem ersten Drehgestellt angebracht ist, ausgefallen ist, und das erste Drehgestell keine freilaufende Achse mehr aufweist, ein zweites Drehgestell gesucht, das eine freilaufende Achse aufweist, wobei diese freilaufende Achse als freilaufende Achse aktiviert wird und eine nicht-freilaufende Achse des ersten Drehgestells als freilaufende Achse aktiviert wird.

Die Erfindung schafft ferner ein Bremssystem für einen Zug, der mehrere Achsen aufweist,
wobei mindestens eine freilaufende Achse F zur Positionsbestimmung des Zuges Z aktiviert ist und die übrigen Achsen als nicht-freilaufende Achsen N zum Bremsen des Zuges Z aktiviert sind,
wobei bei Ausfall einer Bremse, die an einer nicht-freilaufenden Achse N vorgesehen ist, eine bisher freilaufende Achse F als nicht-freilaufende Achse N aktiviert wird und die nicht-freilaufende Achse N, die eine ausgefallene Bremse aufweist, als freilaufende Achse F zur Positionsbestimmung des Zuges Z aktiviert wird.

Bei einer bevorzugten Ausführungsform des erfindungsgemäßen Bremssystems sind an jeder Achse zwei Räder angebracht, die jeweils eine Bremse zum Bremsen des Zuges aufweisen.

Bei einer bevorzugten Ausführungsform des erfindungsgemäßen Bremssystems ist eine Bremssteuerung vorgesehen, welche die an den Achsen angebrachten Bremsen über Steuerleitungen ansteuert.

Bei einer bevorzugten Ausführungsform des erfindungsgemäßen Bremssystems zeigen die an den Achsen angebrachten Bremsen über Anzeigeleitungen der Bremssteuerung ihren Betriebszustand an.

Bei einer weiteren Ausführungsform des erfindungsgemäßen Bremssystems ist an jedem Rad ein Sensor zur Erfassung eines Rollzustandes des Rades vorgesehen.

Bei einer weiteren Ausführungsform des erfindungsgemäßen Bremssystems weist die Bremssteuerung ein Interface auf, über welches alle Achsen, jeweils entweder als nicht-freilaufende Achsen oder als freilaufende Achsen initialisierbar sind.

Im Weiteren werden bevorzugte Ausführungsformen des erfindungsgemäßen Verfahrens und des erfindungsgemäßen Bremssystems unter Bezugnahme auf die beigefügten Figuren zur Erläuterung erfindungswesentlicher Merkmale beschrieben.

Es zeigen:
- Figur 1:: einen Zug nach dem Stand der Technik;
- Figur 2:: ein Ablaufdiagramm einer Bremskontrolle nach dem Stand der Technik;
- Figur 3:: ein Blockschaltbild einer möglichen Ausführungsform des erfindungsgemäßen Bremssystems;
- Figuren 4A, 4B:: Tabellen zur Erläuterung der Funktionsweise des erfindungsgemäßen Verfahrens;
- Figur 5:: ein Ablaufdiagramm einer Bremskontrolle bei dem er- findungsgemäßen Bremssystem;
- Figur 6:: ein Ablaufdiagramm eines Bremsvorgangs bei dem er- findungsgemäßen Bremssystem;
- Figur 7:: ein Ablaufdiagramm zur Erläuterung einer bevorzug- ten Ausführungsform des erfindungsgemäßen Verfah- rens.

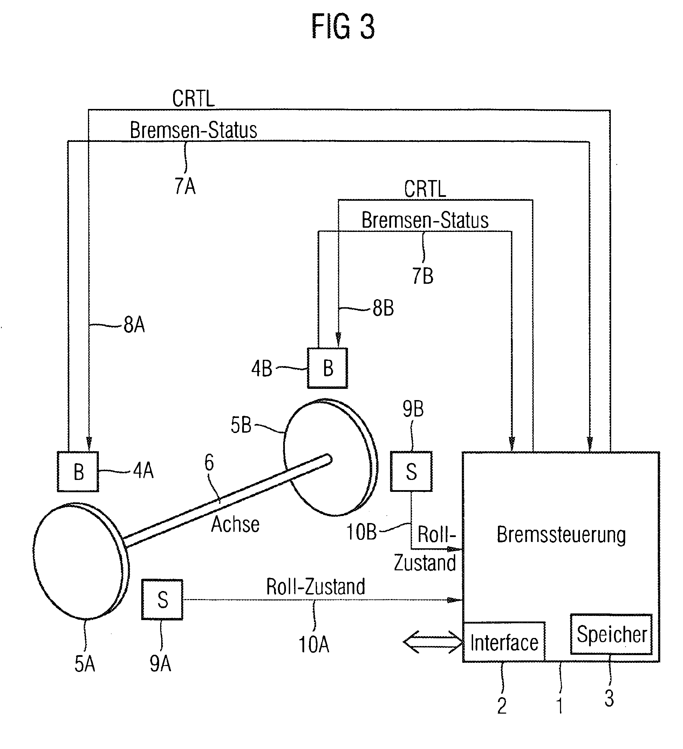

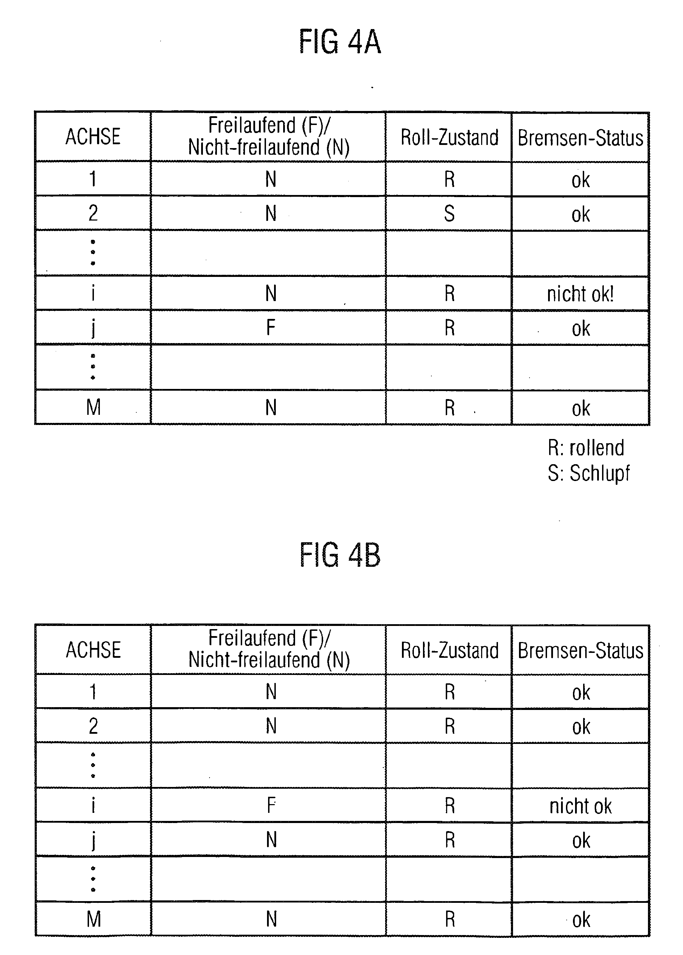

Wie man aus Figur 3 erkennen kann, weist das erfindungsgemäße Bremssystem eine Bremssteuerung 1 auf, die über ein Interface 2 initialisierbar bzw. konfigurierbar ist und mindestens einen Speicher 3 enthält. Die Bremssteuerung 1 ist an einer Vielzahl von Bremsen 4A, 4B angeschlossen, die jeweils an einem Rad 5A, 5B einer Zugachse 6 angebracht sind. Die Bremsen weisen jeweils eine Leitung bzw. einen Bus 7 auf, welche der Bremssteuerung 1 den Betriebzustand bzw. den Status der Bremse 4 anzeigt. Weiterhin steuert die Bremssteuerung 1 jeweils die Bremsen 4A, 4B über Steuerleitungen 8A, 8B an, um die Bremsen zu betätigen. Optional sind zusätzlich an den Rädern Sensoren 9A, 9B angebracht, welche der Bremssteuerung 1 den Rollzustand der Räder über Leitungen 10A, 10B melden. Bei dem erfindungsgemäßen System sind vorzugsweise alle Achsen 6 des Zuges vollständig gleich konstruiert und weisen jeweils an ihren Rädern Bremsen auf. Allerdings wird bei dem erfindungsgemäßen Bremssystem mindestens eine Achse des Zuges als freilaufende Achse zur Positionsbestimmung des Zuges aktiviert bzw. konfiguriert und die übrigen Achsen werden als nicht freilaufende Achsen zum Bremsen des Zuges aktiviert bzw. konfiguriert. Zur Konfiguration einer Achse 6 als freilaufend werden die daran vorgesehenen zugehörigen Bremsen 4A, 4B deaktiviert und ein nicht-dargestellter Zähler zum Zählen der Umdrehungen dieser Achse aktiviert. Sobald eine Bremse 4A, 4B, die an einer nicht-freilaufend konfigurierten Achse 6 vorgesehen ist, ausfällt, wird durch die Bremssteuerung 1 eine bisher freilaufende Achse als neue nicht-freilaufende Achse aktiviert und die bisher nicht-freilaufende Achse, deren Bremse ausgefallen ist, wird durch die Bremssteuerung 1 als freilaufende Achse zur Positionsbestimmung des Zuges Z aktiviert. Die Figuren 4A, 4B zeigen den Speicherinhalt des Speichers 3 bei einer möglichen Ausführungsform des erfindungsgemäßen Bremssystems. Bei dem dargestellten Beispiel weist der Zug M-Achsen auf, wobei ein Großteil der Achsen 6 als nicht-freilaufend (N) und mindestens eine der Achsen 6 als freilaufend (F) initialisiert ist. Darüber hinaus wird über die Sensoren 9A, 9B der Rollzustand der Räder 5 an den Achsen 6 überwacht. Die Bremssteuerung 1 überwacht ferner über die Bremsen-Statusleitungen 7A, 7B den Betriebszustand der an den Achsen 6 angebrachten Bremsen 4A, 4B. Nach der Initialisierung bzw. Konfiguration ist bei korrektem Einbau der Bremsen zunächst der Bremsstatus aller Bremsen ok. Bei dem in Figur 4A dargestellten Beispiel fällt nach einer gewissen Betriebszeit des Zuges Z eine Bremse 4 an der als nicht-freilaufend konfigurierten Achse i aus (Bremsenzustand = nicht ok). In dieser Situation wird durch die erfindungsgemäße Bremssteuerung 1 eine bisher freilaufende Achse, welche zur Positionsbestimmung vorgesehen war, zu einer nicht-freilaufenden Achse umkonfiguriert. Die Achse mit der ausgefallenen Bremse, d. h. die Achse i bei dem in Figur 4A dargestellten Beispiel, wird durch die Bremssteuerung 1 als neue freilaufende Achse zur Positionsbestimmung des Zuges Z aktiviert, wie in Figur 4B dargestellt. Der Bremsenstatus der umkonfigurierten Achse i ist weiterhin fehlerhaft (nicht ok). Bei einer möglichen Ausführungsform des erfindungsgemäßen Verfahrens wird die bisher als freilaufende Achse j nur dann als nicht-freilaufend (N) durch die Bremssteuerung 1 aktiviert, wenn zuvor festgestellt wird, dass die an der freilaufenden Achse j vorgesehenen Bremsen nicht auch ausgefallen sind. Erst wenn die Bremssteuerung 1 feststellt, dass keine freilaufende Achse mehr vorhanden ist deren Bremsen nicht ausgefallen sind, wird ein Notbetrieb des Zuges Z eingeleitet.

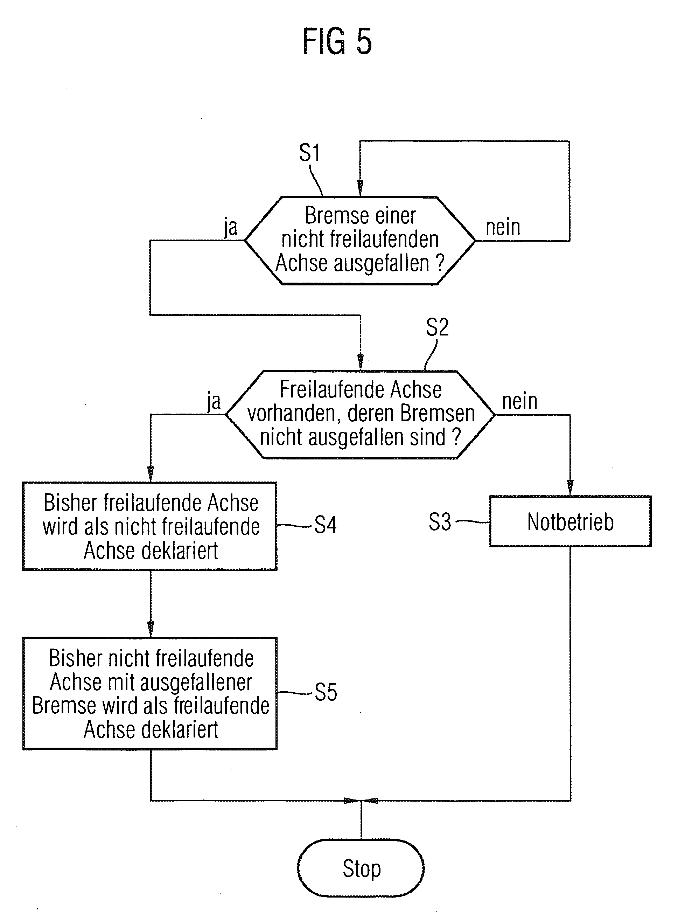

Figur 5 zeigt eine mögliche Ausführungsform eines in der Bremssteuerung 1 laufenden Verfahrens zur Überwachung und Umkonfiguration von Achsen des Zuges. Sobald die Bremssteuerung 1 in einem Schritt S1 feststellt, dass eine Bremse einer nicht-freilaufenden (N) Achse 6 ausgefallen ist, prüft die Bremssteuerung 1 in einem Schritt S2, ob noch eine freilaufende F Achse 6 vorhanden ist, deren Bremsen 4A, 4B nicht ausgefallen sind. Sind keine freilaufenden Achsen mehr vorhanden, deren Bremsen nicht ausgefallen sind, geht der Zug in einem Schritt S3 in einen Notbetrieb über. In dem Notbetrieb S3 wird beispielsweise einer Zentrale der Bremsausfall angezeigt und die Geschwindigkeit des Zuges Z wird herabgesenkt.

Stellt die Bremssteuerung in einem Schritt S2 fest, dass noch eine freilaufende (F) Achse 6 vorhanden ist, wird eine der vorhandenen freilaufenden (F) Achsen 6 in einem Schritt S4 als nicht-freilaufende (N) Achse 6 deklariert, indem das entsprechende Flag gesetzt wird.

Weiterhin wird in einem Schritt S5 die bisher nicht-freilaufende (N) Achse 6 mit mindestens einer ausgefallenen Bremse 4A, 4B nunmehr als freilaufende (F) Achse 6 deklariert, indem das entsprechende Flag gesetzt und der entsprechende Zähler zum Zählen der Umdrehungen dieser Achse aktiviert wird.

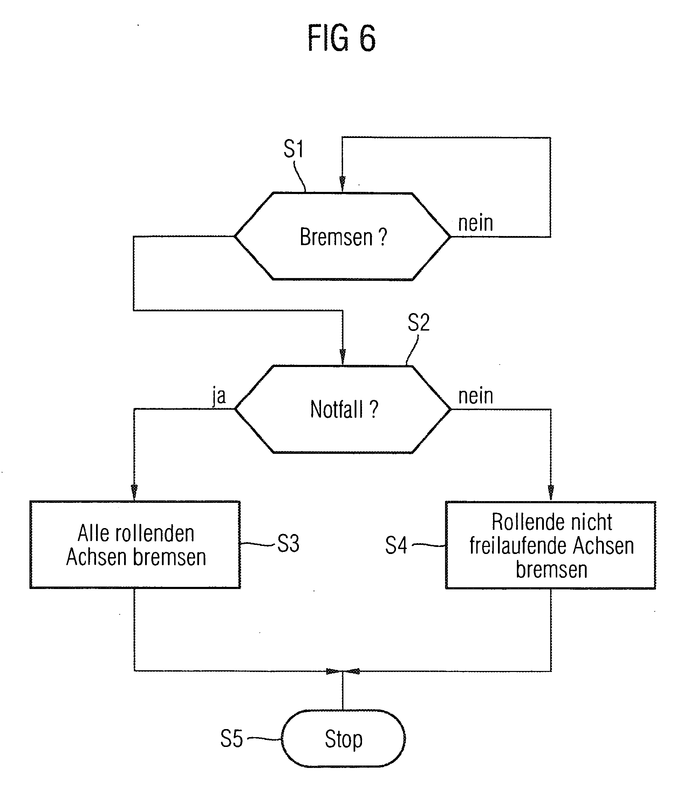

Figur 6 zeigt ein Ablaufdiagramm zur Darstellung einer möglichen Ausführungsform für die Durchführung eines Bremsvorgangs bei dem erfindungsgemäßen Bremssystem.

Wird in einem Schritt S1 ein Bremsvorgang eingeleitet, wird zunächst in einem Schritt S2 geprüft, ob es sich um einen Bremsnotfall handelt. Liegt ein Bremsnotfall vor, werden im Schritt S3 alle rollenden Achsen gebremst, d. h. es werden alle Achsen 6 unabhängig von ihrem Bremsenstatus und unabhängig davon, ob sie als freilaufend oder als nicht-freilaufend konfiguriert sind, gebremst.

Liegt kein Notfall vor, werden in einem Schritt S4 nur die rollenden, als nicht-freilaufend deklarierten Achsen 6 gebremst.

Der Bremsvorgang endet in Schritt S5.

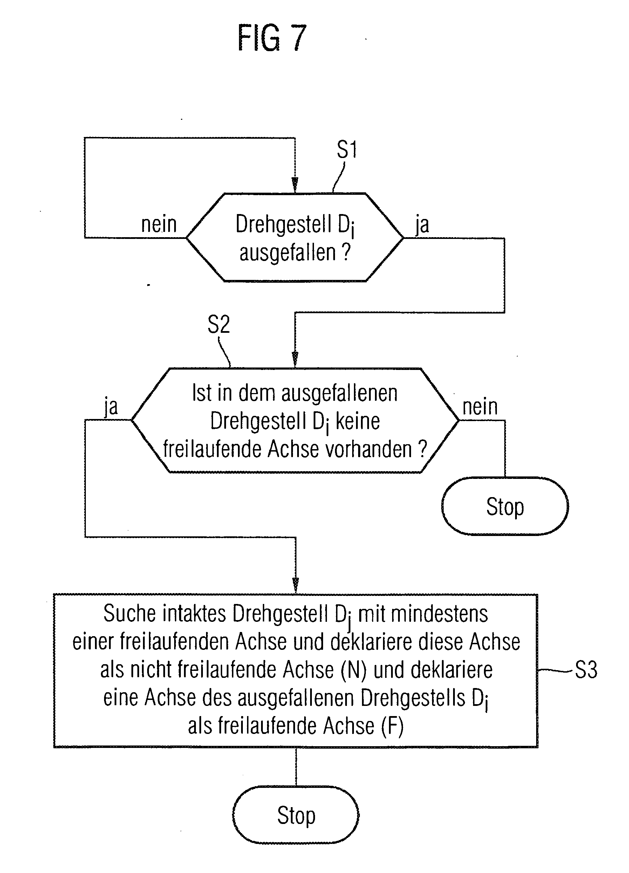

Figur 7 zeigt eine weitere Ausführungsform zur Umkonfiguration der Bremsen bei dem erfindungsgemäßen Bremssystem.

Bei der in Figur 7 dargestellten Ausführungsform wird berücksichtigt, dass die Bremsachsen an Drehgestellen D des Zuges montiert sind. Zunächst wird in einem Schritt S1 überwacht, ob eine Bremse einer nicht-freilaufenden Achse, die an einem ersten Drehgestellt Dᵢ angebracht ist, ausgefallen ist. Fällt an dem ersten Drehgestell Dᵢ die Bremse einer nicht-freilaufenden Achse aus, wird in einem Schritt S2 geprüft, ob an dem ersten Drehgestell Dᵢ keine freilaufende Achse mehr vorhanden ist. Ist keine freilaufende Achse mehr an dem ersten Drehgestell Dᵢ vorhanden, wird in einem weiteren Schritt S3 nach einem anderen zweiten Drehgestell Dⱼ gesucht, welches mindestens noch eine weitere freilaufende Achse aufweist. Wird ein derartiges Drehgestell gefunden, wird die freilaufende Achse dieses zweiten Drehgestells Dⱼ als nicht-freilaufende Achse umkonfiguriert und eine Achse des ausgefallenen ersten Drehgestells Dᵢ wird als freilaufende Achse zur Positionsbestimmung des Zuges aktiviert.

Bei einer möglichen Ausführungsform des erfindungsgemäßen Verfahrens wird dieses in einem bereits vorhandenen Gleitschutzmechanismus des Zugsystems eingebunden. Dieses Gleitschutzsystem erkennt, ob ein spezifisches Rad des Zuges momentan rutscht bzw. blockiert, sodass eine Bremsung dieses Rades dann ausgeschlossen wird bzw. nur in einem rollenden Zustand des Rades erfolgt. Das Gleitschutzsystem wird durch das erfindungsgemäße Verfahren zur bremskrafterhaltenden Aktivierung einer freilaufenden Achse erweitert, indem ein weiterer logischer Parameter "freilaufende Achse" vorgesehen wird. Wird dieser neue logische Parameter auf "Nein" gesetzt, erfüllt das Gleitschutzsystem seine bekannte vorgegebene Funktionalität. Ist allerdings dieser neue logische Parameter auf "Ja" gesetzt, wird die entsprechende Bremse nur aktiviert, wenn eine Notfallbremsung vorliegt.

Mit dem erfindungsgemäßen Verfahren ist es möglich, eine Umkonfiguration der Achsen auch während des Betriebes des Zuges vorzunehmen. Dies kann bei einer möglichen Ausführungsform auch von einer entfernten zentralen Steuerung über das Interface 2 der Bremssteuerung 1 erfolgen.

Das erfindungsgemäße Bremssystem bietet einige Vorteile. Bei der Herstellung des Zuges können alle Achse gleich behandelt werden, d. h. es muss bei der Konstruktion und Montage nicht mehr zwischen freilaufenden Achsen und nicht-freilaufenden Achsen unterschieden werden.

Die Definition einer spezifischen Achse zur freilaufenden Achse am Ende des Montagevorgangs erfolgt schnell, einfach und sicher über die Konfiguration der Bremssteuerung 1 und das Interface 2.

Ein weiterer Vorteil besteht darin, dass der Notbetrieb eines Zuges nur eingeleitet wird, wenn ausnahmsweise keine freilaufende Achse mehr vorhanden ist deren Bremsen nicht defekt sind. Hierdurch können die Betriebszeiten des Zuges verlängert bzw. die Ausfallzeit des Zuges verkürzt werden. Indirekt wird hierdurch auch die Anzahl der Störungen des Fahrplans reduziert.

Ein weiterer Vorteil des erfindungsgemäßen Bremssystems besteht darin, dass die Anzahl der vorzusehenden Achsen minimiert wird, da eine freilaufende Achse gewissermaßen eine Reserve für eine ausgefallene nicht-freilaufende Achse bildet. Hierdurch kann das Gewicht des Zuges ebenfalls reduziert werden.

## Patentansprüche

1. Verfahren zur bremskrafterhaltenden Aktivierung einer freilaufenden Achse eines Zuges (Z), der mehrere Achsen aufweist,
wobei mindestens eine freilaufende Achse (F) zur Positionsbestimmung des Zuges aktiviert ist und die übrigen Achsen (N) als nicht-freilaufende Achsen (N) zum Bremsen des Zuges (Z) aktiviert sind,
wobei bei Ausfallen einer Bremse (4), die an einer nicht-freilaufenden Achse (N) vorgesehen ist, eine bisher freilaufende Achse (F) als nicht-freilaufende Achse (N) aktiviert wird und die nicht-freilaufende Achse (N), die die ausgefallene Bremse (4) aufweist, als freilaufende Achse (F) zur Positionsbestimmung des Zuges (Z) aktiviert wird.

2. Verfahren nach Anspruch 1,
wobei die bisher als freilaufend aktivierte Achse (F) nur dann als nicht-freilaufend aktiviert wird, wenn festgestellt wird, dass die an der freilaufenden Achse (F) vorgesehenen Bremsen (4) nicht ausgefallen sind.

3. Verfahren nach Anspruch 1,
wobei, wenn festgestellt wird, dass keine freilaufende Achse (F) vorhanden ist, deren Bremsen (4) nicht ausgefallen sind, ein Notbetrieb des Zuges (Z) eingeleitet wird.

4. Verfahren nach Anspruch 1,
wobei die Achsen als nicht-freilaufende Achsen (N) zum Bremsen des Zuges und als freilaufende Achsen (F) zur Positionsbestimmung des Zuges initialisiert werden.

5. Verfahren nach Anspruch 1,
wobei bei einem normalen Bremsvorgang der Zug durch Betätigen der Bremsen der als nicht-freilaufend aktivierten Achsen (N) gebremst wird.

6. Verfahren nach Anspruch 1,
wobei bei einem Notbremsvorgang der Zug (Z) durch Betätigen der Bremsen (4) der als nicht-freilaufend aktivierten Achsen (N) und der Bremsen (4) der als freilaufend aktivierten Achsen (F) gebremst wird.

7. Verfahren nach Anspruch 1,
wobei, wenn eine Bremse (4) einer nicht-freilaufenden Achse (N), die an einem ersten Drehgestell (Dᵢ) angebracht ist, ausgefallen ist und das erste Drehgestell (Dᵢ) keine freilaufende Achse (F) aufweist, ein anderes zweites Drehgestell (Dⱼ) gesucht wird, das eine freilaufende Achse (F) aufweist, wobei diese freilaufende Achse (F) als nicht-freilaufende Achse (N) aktiviert wird und eine nicht-freilaufende Achse (N) des ersten Drehgestells (Dᵢ) als freilaufende Achse (F) aktiviert wird.

8. Bremssystem für einen Zug, der mehrere Achsen aufweist, wobei mindestens eine freilaufende Achse (F) zur Positionsbestimmung des Zuges (Z) aktiviert ist und die übrigen Achsen als nicht-freilaufende Achsen (N) zum Bremsen des Zuges (Z) aktiviert sind,
wobei bei Ausfall einer Bremse (4), die an einer nicht-freilaufenden Achse (N) vorgesehen ist, eine bisher freilaufende Achse (F) als nicht-freilaufende Achse (N) aktiviert wird und die nicht-freilaufende Achse (N), die eine ausgefallene Bremse (4) aufweist, als freilaufende Achse (F) zur Positionsbestimmung des Zuges (Z) aktiviert wird.

9. Bremssystem nach Anspruch 8,
wobei an jeder Achse (6) zwei Räder (5A, 5B) angebracht sind, die jeweils eine Bremse (4A, 4B) zum Bremsen des Zuges (Z) aufweisen.

10. Bremssystem nach Anspruch 9,
wobei eine Bremssteuerung (1) vorgesehen ist, welche die an den Achsen (6) angebrachten Bremsen (4A, 4B) über Steuerleitungen (8A, 8B) ansteuert.

11. Bremssystem nach Anspruch 9,
wobei die an den Achsen (6) angebrachten Bremsen (4A, 4B) über Anzeigeleitungen (7A, 7B) der Bremssteuerung (1) ihren Betriebszustand anzeigen.

12. Bremssystem nach Anspruch 9,
wobei an jedem Rad (5A, 5B) ein Sensor (9A, 9B) zur Erfassung eines Rollzustandes des Rades vorgesehen ist.

13. Bremssystem nach Anspruch 10,
wobei die Bremssteuerung (1) ein Interface (2) aufweist, über welches die Achsen (6), jeweils als nicht-freilaufende Achsen (N) oder als freilaufende Achsen (F) initialisierbar sind.

## Claims

1. Method for activating a freewheeling axle of a train (Z) having a plurality of axles in a braking force maintaining manner,
wherein at least one freewheeling axle (F) is activated for determining the position of the train and the remaining axles (N) are activated as non-freewheeling axles (N) for braking the train (Z),
wherein in the event of failure of a brake (4) provided on a non-freewheeling axle (N), a hitherto freewheeling axle (F) is activated as a non-freewheeling axle (N) and the non-freewheeling axle (N) having the failed brake (4) is activated as a freewheeling axle (F) for determining the position of the train (Z).

2. Method according to claim 1,
wherein the axle hitherto activated as freewheeling (F) is only activated as non-freewheeling if it is ascertained that the brakes (4) provided on the freewheeling axle (F) have not failed.

3. Method according to claim 1,
wherein, if it is ascertained that no freewheeling axle (F) is present whose brakes (4) have not failed, emergency operation of the train (Z) is initiated.

4. Method according to claim 1,
wherein the axles are initialised as non-freewheeling axles (N) for braking the train and as freewheeling axles (F) for determining the position of the train.

5. Method according to claim 1,
wherein, for normal braking, the train is braked by applying the brakes of the axles activated as non-freewheeling (N).

6. Method according to claim 1,
wherein, for emergency braking, the train (Z) is braked by applying the brakes (4) of the axles activated as non-freewheeling (N) and the brakes (4) of the axles activated as freewheeling (F).

7. Method according to claim 1,
wherein, if a brake (4) of a non-freewheeling axle (N) mounted to a first wheel truck (Dᵢ) has failed and the first wheel truck (Dᵢ) has no freewheeling axle (F), another second wheel truck (Dⱼ) having a freewheeling axle (F) is searched for, the latter freewheeling axle (F) being activated as a non-freewheeling axle (N) and a non-freewheeling axle (N) of the first wheel truck (Dᵢ) being activated as a freewheeling axle (F).

8. Braking system for a train having a plurality of axles,
wherein at least one freewheeling axle (F) is activated for determining the position of the train (Z) and the remaining axles are activated as non-freewheeling axles (N) for braking the train (Z),
wherein in the event of failure of a brake (4) provided on a non-freewheeling axle (N), a hitherto freewheeling axle (F) is activated as a non-freewheeling axle (N) and the non-freewheeling axle (N) having the failed brake (4) is activated as a freewheeling axle (F) for determining the position of the train (Z).

9. Braking system according to claim 8,
wherein two wheels (5A, 5B) are mounted to each axle (6), said wheels each having a brake (4A, 4B) for braking the train (Z).

10. Braking system according to claim 9,
wherein a brake controller (1) is provided which controls, via control lines (8A, 8B), the brakes (4A, 4B) mounted to the axles (6).

11. Braking system according to claim 9,
wherein the brakes (4A, 4B) mounted to the axles (6) indicate their operating state to the brake controller (1) via indication lines (7A, 7B).

12. Braking system according to claim 9,
wherein each wheel (5A, 5B) is provided with a sensor (9A, 9B) for detecting a rolling state of a wheel.

13. Braking system according to claim 10,
wherein the brake controller (1) has an interface (2) via which the axles (6) can each be initialised as non-freewheeling axles (N) or as freewheeling axles (F).

## Revendications

1. Procédé pour activer, en conservant la force de freinage, un essieu à rotation libre d'un train (Z) à essieux multiples, dans lequel au moins un essieu à rotation libre (F) est activé pour déterminer la position du train, les autres essieux (N) étant activés comme essieux à rotation non-libres (N) pour freiner le train (Z),
dans lequel, en cas de défaillance d'un frein (4) prévu sur un essieu à rotation non-libre (N), un essieu (F) jusqu'alors à rotation libre est activé comme essieu à rotation non-libre (N), l'essieu à rotation non-libre (N) présentant le frein (4) défaillant étant activé comme essieu à rotation libre (F) pour déterminer la position du train (Z).

2. Procédé selon la revendication 1,
dans lequel l'essieu (F) jusqu'alors activé comme à rotation libre n'est activé comme à rotation non-libre que lorsqu'on constate que les freins (4) prévus sur l'essieu à rotation libre (F) ne sont pas défaillants.

3. Procédé selon la revendication 1,
dans lequel un régime de secours du train (Z) est déclenché lorsqu'on constate l'absence d'un essieu à rotation libre (F) dont les freins (4) ne sont pas défaillants.

4. Procédé selon la revendication 1,
dans lequel les essieux sont initialisés comme essieux à rotation non-libres (N) pour freiner le train et comme essieux à rotation libres (F) pour déterminer la position du train.

5. Procédé selon la revendication 1,
dans lequel, lors d'un freinage normal, le train est freiné en actionnant les freins des essieux (N) activés comme à rotation non-libres.

6. Procédé selon la revendication 1,
dans lequel, lors d'un freinage d'urgence, le train (Z) est freiné en actionnant les freins (4) des essieux (N) activés comme à rotation non-libres et les freins (4) des essieux (F) activés comme à rotation libres.

7. Procédé selon la revendication 1,
dans lequel, lorsqu'un frein (4) d'un essieu à rotation non-libre (N) monté sur un premier bogie (Dᵢ) est défaillant et que le premier bogie (Dᵢ) ne possède pas d'essieu à rotation libre (F), un autre, second bogie (Dⱼ) possédant un essieu à rotation libre (F) est recherché, cet essieu à rotation libre (F) étant activé comme essieu à rotation non-libre (N), et un essieu à rotation non-libre (N) du premier bogie (Dᵢ) étant activé comme essieu à rotation libre (F).

8. Système de freinage pour un train à essieux multiples,
dans lequel au moins un essieu à rotation libre (F) est activé pour déterminer la position du train, les autres essieux étant activés comme essieux à rotation non-libres (N) pour freiner le train (Z),
dans lequel, en cas de défaillance d'un frein (4) prévu sur un essieu à rotation non-libre (N), un essieu (F) jusqu'alors à rotation libre est activé comme essieu à rotation non-libre (N), l'essieu à rotation non-libre (N) présentant le frein (4) défaillant étant activé comme essieu à rotation libre (F) pour déterminer la position du train (Z).

9. Système de freinage selon la revendication 8,
dans lequel, sur chaque essieu (6), deux roues (5A, 5B) sont montées, qui présentent chacune un frein (4A, 4B) pour freiner le train (Z).

10. Système de freinage selon la revendication 9,
dans lequel est prévue une commande de freinage (1), qui commande les freins (4A, 4B) montés sur les essieux (6) par le biais de lignes de commande (8A, 8B).

11. Système de freinage selon la revendication 9,
dans lequel les freins (4A, 4B) montés sur les essieux (6) indiquent leur état de fonctionnement par le biais de lignes d'indication (7A, 7B).

12. Système de freinage selon la revendication 9,
dans lequel, sur chaque roue (5A, 5B), un capteur (9A, 9B) est prévu, lequel est destiné à détecter un état roulant de la roue.

13. Système de freinage selon la revendication 10,
dans lequel la commande de freinage (1) présente une interface (2) permettant d'initialiser les essieux (6) comme essieux à rotation non-libres (N) ou comme essieux à rotation libres (F).
